(19) Europäisches Patentamt
European Patent Office
Office européen des brevets

(11) **EP 1 817 086 B1**

(12) **EUROPÄISCHE PATENTSCHRIFT**

(45) Veröffentlichungstag und Bekanntmachung des Hinweises auf die Patenterteilung:
**24.09.2008 Patentblatt 2008/39**

(21) Anmeldenummer: **05806458.5**

(22) Anmeldetag: **21.11.2005**

(51) Int Cl.:
**A62D 1/00** *(2006.01)*

(86) Internationale Anmeldenummer:
**PCT/EP2005/012427**

(87) Internationale Veröffentlichungsnummer:
**WO 2006/056379 (01.06.2006 Gazette 2006/22)**

(54) **BRANDLÖSCHENDE UND/ODER BRANDHEMMENDE ZUSAMMENSETZUNGEN**

FIRE EXTINGUISHING AND/OR FIRE-RETARDANT COMPOSITIONS

COMPOSITIONS D'EXTINCTION ET/OU D'INHIBITION D'INCENDIES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.11.2004 US 630892 P**
**24.11.2004 DE 102004056830**

(43) Veröffentlichungstag der Anmeldung:
**15.08.2007 Patentblatt 2007/33**

(73) Patentinhaber: **BASF SE**
**67056 Ludwigshafen (DE)**

(72) Erfinder:
• **BECK, Martin**
**67133 Maxdorf (DE)**
• **CHAMP, Samantha**
**67063 Ludwigshafen (DE)**
• **TÖNNESSEN, Markus**
**67069 Ludwigshafen (DE)**
• **ZIEMER, Antje**
**68199 Mannheim (DE)**
• **GOEBEL, Gerd**
**60386 Frankfurt (DE)**
• **PFEIFFER, Matthias**
**67459 Boehl-Iggelheim (DE)**

(56) Entgegenhaltungen:
**WO-A-03/018695      US-A1- 2003 212 177**

• **DATABASE WPI Section Ch, Week 198932 Derwent Publications Ltd., London, GB; Class A97, AN 1989-231413 XP002391095 & JP 01 166777 A (YAMATO SHOKAKI KK) 30. Juni 1989 (1989-06-30)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft brandlöschende und/oder brandhemmende Zusammensetzungen, Verfahren zu ihrer Herstellung sowie die Verwendung der Zusammensetzungen zur Brandbekämpfung oder als brandhemmende Beschichtungen.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

WO 2003/018695 offenbart brandhemmende Zusammensetzungen. Die Zusammensetzungen enthalten Harnstoff bzw. ein Harnstoffderivat, einen Verdicker sowie ein Treibmittel.

JP 01/166777 beschreibt brandhemmende Zusammensetzungen, die Verdicker und Carbonsäuresalze erhalten.

In der Brandbekämpfung werden schon seit langem Lösungen anorganischer Salze verwendet, beispielsweise Alkali- bzw. Erdalkalisalze der Kohlensäure, Phosphorsäure oder Borsäure. Die Salze unterstützen die Löschwirkung des Wassers und werden als konzentrierte Lösungen eingesetzt. Die Wirkung der Salze beruht darauf, dass sie inerte Gase freisetzen, beispielsweise Kohlendioxid aus Carbonaten, oder schmelzen und so auf den brennbaren Materialien eine luftundurchlässige Schicht entsteht. In beiden Fällen wird der Luftzutritt zum brennbaren Material erschwert oder gar unterbunden. Nachteilig bei dem Verfahren ist die Ausbildung eines später nur schwer zu entfernenden Überzuges. Sie zeigen keine kühlende Wirkung und können Brandgut kaum löschen da es, wie auch Wasser, sehr schnell abläuft. Die Schutzwirkung entsteht nur durch vorhergehendes und mehrfaches Besprühen der Gegenstände. An glatten oder wachsartigen Gegenständen, wie Blätter, Bretter oder Glasscheiben bleibt eine Salzlösung nicht oder nur in geringem Maße kleben.

Seit den 70er Jahren des vorigen Jahrhunderts ist die Verwendung von Salzen organischer Carbonsäuren, beispielsweise Oxalsäure, Weinsäure oder Zitronensäure, in der Brandbekämpfung bekannt. Im Gegensatz zu den oben erwähnten anorganischen Salzen lassen sich die Überzüge nach dem Löschen des Feuers leicht entfernen. Beispiele für die Verwendung von Salzen organischer Carbonsäuren in der Brandbekämpfung werden in DE-C 13 02 520, DE-A 35 25 684, EP-A 059 178, EP-A 426 178, US 1,278,718, US 4,888,136, US 5,945,025, US 2003/0212177 und WO 88/00482 genannt.

DE-C 13 02 520 offenbart die Verwendung von Alkalisalzen von Oxycarbonsäuen in Trockenlöschpulvern.

DE-A 35 25 684 beschreibt Lösungen, bestehend aus Zitronensäure/Zitrat, Kaliumhydroxid und Wasser, die zur Brandbekämpfung und zur Imprägnierung brennbarer Materialien geeignet sind. Insbesondere soll die Lösung saure Brandgase binden.

EP-A 059 178 beschreibt die Verwendung von konzentrierten Lösungen von Alkalisalzen der Zitronensäure als Löschmittel.

EP-A 426 178 offenbart brandhemmende Asphaltzusammensetzungen, wobei die Zusammensetzung als brandhemmende Komponente Kaliumzitrat und ein Silikonpolymer enthält.

US 1,278,718 offenbart Zusammensetzungen, bestehend aus konzentrierten Lösungen von Alkalisalz der Zitronensäure und Alkalimetallhydrogencarbonat, als Füllung für Feuerlöscher.

US 4,888,136 beschreibt die Verwendung von Aluminiumsalzen der Zitronensäure und der Milchsäure für brandhemmende Imprägnierungen von Zellulosefasern.

US 5,945,025 beschreibt Zusammensetzungen aus Kaliumzitrat und Natriumhydrogenkarbonat zur Feuerbekämpfung.

US 2003/0212177 beschreibt brandhemmende Zusammensetzungen, enthaltend Ammoniumpolyphosphat und ein Biopolymer, beispielsweise Xanthan.

WO 88/00482 offenbart Stoffgemische zur Brandbekämpfung und zur Herstellung brandhemmender Beschichtungen auf Basis von Alkalisalzen der Zitronensäure.

Die obengenannten Zusammensetzungen weisen eine ausgeprägte Langzeitwirkung auf, d.h. die Zusammensetzungen können als wässrige Lösungen aufgebracht werden und behalten ihre brandhemmende Wirkung auch nach dem Trocknen.

Ein weiteres Problem bei der Brandbekämpfung ist, dass das zum Löschen verwendete Wasser abfließen und damit nur teilweise zu Kühlen es Brandherdes genutzt werden kann. Daher muss sehr viel und sehr lange Wasser eingesetzt werden, mit der Folge, dass der Wasserschaden oft größer als der reine Brandschaden ist. Daneben können auch große Mengen verschmutzen Löschwassers anfallen, was ökologisch bedenklich ist.

Zur Lösung dieses Problems wird seit über 35 Jahren die Verwendung von Hydrogelen vorgeschlagen, beispielsweise in US 3,229,769 und US 5,849,210. Die Hydrogele werden aus einem wasserabsorbierenden Polymer und Wasser hergestellt. Das Hydrogel bindet das Wasser und verhindert damit das Fortfließen des Wassers von Brandherd.

Dadurch, dass die Hydrogele eine große Menge an Wasser am Brandherd halten können, weisen die Hydrogele eine gute Sofortlöschwirkung auf. Die Langzeitwirkung der Hydrogele ist dagegen gering. Die Hydrogele können trocknen und verlieren damit rasch ihre Wirkung. Die verbleibenden salzähnlichen getrockneten Hydrogele zeigen eine sehr geringe brandhemmende Wirkung.

Es ist allgemein bekannt, dass die Quellfähigkeit wasserabsorbierender Polymere sehr stark vom Salzgehalt der zur Quellung verwendeten wässrigen Lösung abhängt. Dieser Zusammenhang wird beispielsweise in Ullmann's Encyclopedia of Industrial Chemistry, 6. Auflage, Band 35, Seiten 81 und 82, beschrieben. So nimmt bereits in einer 1 gew.-%igen wässrigen Kochsalzlösung die Quellfähigkeit eines wasserabsorbierenden Polymeren gegenüber Wasser um 70% ab.

Aufgrund dieser Eigenschaft wasserabsorbierender Polymere erschien die Kombination wasserabsorbierender Polymere mit brandhemmenden Salzen zu brandhemmenden Zusammensetzungen mit guter Sofortlöschwirkung und guter Langzeitwirkung nicht möglich.

Aufgabe der vorliegenden Erfindung war die Bereitstellung von brandhemmenden Zusammensetzungen mit guter Sofortlöschwirkung und guter Langzeitwirkung.

Gelöst wurde die Aufgabe durch neue brandhemmende Zusammensetzungen, enthaltend

a) mindestens ein wasserabsorbierendes Polymer mit einer Zentrifugenretentionskapazität von mindestens 15 g/g,
b) mindestens Alkalisalz einer nichtpolymeren gesättigten Carbonsäure,
c) gegebenenfalls mindestens ein Verdickungsmittel,
d) gegebenenfalls Wasser,
e) gegebenenfalls mindestens ein Biozid,
f) gegebenenfalls mindestens einen Lösungsvermittler,
g) gegebenenfalls mindestens ein Farbmittel,
h) gegebenenfalls mindestens ein Deckhilfsmittel und
i) gegebenenfalls ein Schaummittel.

Die in den erfindungsgemäßen Zusammensetzungen verwendbaren wasserabsorbierenden Polymere unterliegen keiner Beschränkung. Die Herstellung wasserabsorbierender Polymere wird beispielsweise in der Monographie "Modern Superabsorbent Polymer Technology", F.L. Buchholz und A.T. Graham, Wiley-VCH, 1998, oder in Ull-mann's Encyclopedia of Industrial Chemistry, 6. Auflage, Band 35, Seiten 73 bis 103, beschrieben.

Die wasserabsorbierenden Polymere weisen eine Zentrifugenretentionskapazität von vorzugsweise mindestens 20 g/g, besonders bevorzugt mindestens 25 g/g, auf. Die Zentrifugenretentionskapazität wird gemäß der von der EDANA (European Disposables and Nonwovens Association) empfohlenen Testmethode Nr. 441.2-02 "Centrifuge retention capacity" bestimmt.

Zur Herstellung wasserabsorbierender Polymere können hydrophile ethylenisch ungesättigte, Monomere in Gegenwart von Vernetzern zu einem Grundpolymer umgesetzt werden. Die Polymerisation kann auch in Gegenwart einer geeigneten Pfropfgrundlage durchgeführt werden, wie in US 5,041,496 beschrieben. Die Reaktion kann beispielsweise als radikalische Lösungspolymerisation oder inverse Suspensionspolymerisation durchgeführt werden. Die radikalische Lösungspolymerisation ist bevorzugt.

Geeignete Monomere sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure.

Die wasserabsorbierenden Polymere sind vernetzt, d.h. die Polymerisation wird in Gegenwart von Verbindungen mit mindestens zwei polymerisierbaren Gruppen, die in das Polymernetzwerk radikalisch einpolymerisiert werden können, durchgeführt.

Geeignete Vernetzer sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A 530 438 beschrieben, Di- und Triacrylate, wie in EP-A 547 847, EP-A 559 476, EP-A 632 068, WO 93/21237, WO 03/104299, WO 03/104300, WO 03/104301 und in der deutschen Patentanmeldung mit dem Aktenzeichen 103 31 450.4 beschrieben, gemischte Acrylate, die neben Acrylatgruppen weitere ethylenisch ungesättigte Gruppen enthalten, wie in den deutschen Patentanmeldungen mit den Aktenzeichen 103 31 456.3 und 103 55 401.7 beschrieben, oder Vernetzermischungen, wie beispielsweise in DE-A 195 43 368, DE-A 196 46 484, WO 90/15830 und WO 02/32962 beschrieben.

Die polymerisierbaren Gruppen werden vorzugsweise aus der Gruppe Allyl, Acryloxy und Methacryloxy ausgewählt werden. Allylether- und Allylamingruppen sind besonders bevorzugt. Allylethergruppen sind ganz besonders bevorzugt. Die Vernetzer können zwei, drei, vier oder mehr, vorzugsweise zwei, drei oder vier, besonders bevorzugt drei oder vier, polymerisierbare Gruppen enthalten. Die polymerisierbaren Gruppen im Vernetzer können gleich oder verschieden sein, beispielsweise kann der Vernetzer mindestens eine Acrylester-Gruppe und mindestens eine Allylether-Gruppe, mindestens eine Acrylester-Gruppe und mindestens eine Allylamin-Gruppe, mindestens eine Methacrylester-Gruppe und mindestens eine Allylether-Gruppe, mindestens eine Methacrylester-Gruppe und mindestens eine Allylamin-Gruppe, mindestens zwei Acrylester-Gruppen oder mindestens zwei Methacrylester-Gruppen, vorzugsweise mindestens eine Allylether-Gruppe und mindestens eine Allylamin-Gruppe oder mindestens zwei Allylamin-Gruppen, besonders bevorzugt mindestens zwei Allylether-Gruppen, enthalten.

Bevorzugte Vernetzer sind Ethylenglykoldiallylether, Diethylenglykoldiallylether, Polyethylenglykoldiallylether, Propylenglykoldiallylether, Dipropylenglykoldiallylether, Polypropylenglykoldiallylether, Tetraallyloxyethan, Trimethylolpropandiallylether, Trimethylolpropantriallylether, Pentaerithrittriallylether und Pentaerithrittetraallylether. Besonders bevorzugte Vernetzer sind Tetraallyloxyethan, Trimethylolpropandiallylether, Trimethylolpropantriallylether, Pentaerithrittriallylether und Pentaerithrittetraallylether.

Die Herstellung eines geeigneten Grundpolymers sowie weitere geeignete hydrophile ethylenisch ungesättigte Monomere und Vernetzer werden in DE-A 199 41 423, EP-A 686 650, WO 01/45758 und WO 03/104300 beschrieben.

Die Umsetzung wird vorzugsweise in einem Kneter, wie beispielsweise in WO 01/38402 beschrieben, oder auf einem Bandreaktor, wie beispielsweise in EP-A 955 086 beschrieben, durchgeführt.

Die Säuregruppen der erhaltenen Hydrogele sind üblicherweise teilweise neutralisiert, vorzugsweise zu 25 bis 85 mol-%, bevorzugt zu 40 bis 75 mol-%, besonders bevorzugt zu 51 bis 69 mol-%, ganz besonders bevorzugt zu 55 bis 65 mol-%, insbesondere bevorzugt von 53 bis 63 mol-%, insbesondere besonders bevorzugt zu 59 bis 61 mol-%, wobei die üblichen Neutralisationsmittel verwendet werden können, beispielsweise Ammoniak, Amine, wie Etanolamin, Diethanolamin, Triethanolamin oder Dimethylaminoethanolamin, vorzugsweise Alkalimetallhydroxide, Alkalimetalloxide, Alkalimetallcarbonate oder Alkalimetallhydrogencarbonate sowie deren Mischungen, wobei Natrium und Kalium als Alkalimetalle besonders bevorzugt sind, ganz besonders bevorzugt jedoch Kaliumhydroxid, Kaliumcarbonat oder Kaliumhydrogencarbonat sowie deren Mischungen. Üblicherweise wird die Neutralisation durch Einmischung des Neutralisationsmittels als wässrige Lösung oder bevorzugt auch als Feststoff erreicht.

Die Neutralisation kann vor der Polymerisation auf der Stufe der Monomerlösung oder nach der Polymerisation auf der Stufe des Hydrogels durchgeführt werden. Es ist aber auch möglich einen Teil des Neutralistionsmittels der Monomerlösung zuzusetzen und den gewünschten Endneutralisationsgrad erst nach der Polymerisation auf der Stufe des Hydrogels einzustellen. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Vorzugsweise wird die Neutralisation zumindest teilweise nach der Polymerisation durchgeführt. Beispielsweise können bis zu 40 mol-%, vorzugsweise 10 bis 30 mol-%, besonders bevorzugt 15 bis 25 mol-%, der Säureguppen vor der Polymerisation zu neutralisiert werden indem ein Teil des Neutralisationsmittels bereits der Monomerlösung zugesetzt und der gewünschte Endneutralisationsgrad erst nach der Polymerisation auf der Stufe des Hydrogels eingestellt wird.

Die neutralisierten Säuregruppen des gegebenenfalls nachneutralisierten Hydrogels weisen vorzugsweise zu mindestens 15 mol-%, bevorzugt zu mindestens 33 mol-%, besonders bevorzugt zu mindestens 80 mol-%, ganz besonders bevorzugt zu mindestens 95 mol-%, Kaliumionen als Gegenion auf.

Das neutralisierte Hydrogel wird dann mit einem Band- oder Walzentrockner getrocknet bis der Restfeuchtegehalt vorzugsweise unter 10 Gew.-%, insbesondere unter 5 Gew.-% liegt, wobei der Wassergehalt gemäß der von der EDANA (European Disposables and Nonwovens Association) empfohlenen Testmethode Nr. 430.2-02 "Moisture content" bestimmt wird. Das getrocknete Hydrogel wird hiernach gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 $\mu$m, besonders bevorzugt unter 900 $\mu$m, ganz besonders bevorzugt unter 800 $\mu$m, und vorzugsweise über 100 $\mu$m, besonders bevorzugt über 150 $\mu$m, ganz besonders bevorzugt über 200 $\mu$m.

Ganz besonders bevorzugt ist eine Partikelgröße (Siebschnitt) von 106 bis 850 $\mu$m. Die Partikelgröße wird gemäß der von der EDANA (European Disposables and Nonwovens Association) empfohlenen Testmethode Nr. 420.2-02 "Particle size distribution" bestimmt.

Die Grundpolymere werden vorzugsweise anschließend oberflächennachvernetzt. Hierzu geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A 083 022, EP-A 543 303 und EP-A 937 736 beschrieben, di- oder polyfunktionelle Alkohole, wie in DE-C 33 14 019, DE-C 35 23 617 und EP-A 450 922 beschrieben, oder β-Hydroxyalkylamide, wie in DE-A 102 04 938 und US 6,239,230 beschrieben.

Desweiteren sind in DE-A 40 20 780 zyclische Karbonate, in DE-A 198 07 502.2 Oxazolidon und dessen Derivate, wie 2-Hydroxyethyl-2-oxozolidon, in DE-A 198 07 992 Bis- und Poly-2-oxazolidinone, in DE-A 198 54 573 2 Oxotetrahydro-1,3-oxazin und dessen Derivate, in DE-A 198 54 574 N-Acyl-2-Oxazolidone, in DE-A 102 04 937 zyclische Harnstoffe, in der deutschen Patentanmeldung mit dem Aktenzeichen 103 34 584.1 bizyklische Amidacetale, in EP-A 1 199 327 Oxetane und zyklische Harnstoffe und in WO 03/031482 Morpholin-2,3-dion und dessen Derivate als geeignete Oberflächennnachvernetzer beschrieben.

Die Nachvernetzung wird üblicherweise so durchgeführt, dass eine Lösung des O-berflächennachvernetzers auf das Hydrogel oder das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Vorzugsweise wird das Grundpolymer schwach nachvernetzt, d.h. die Nachvernetzerkonzentration beträgt typischerweise unter 0,3 Gew.%, vorzugsweise unter 0,2 Gew.-%, besonders bevorzugt unter 0,15 Gew.-% und ganz besonders bevorzugt unter 0,1 Gew.-%, jeweils bezogen auf das Grundpolymer. Um eine ausreichende Nachvernetzung zu erreichen werden vorzugsweise über 0,01 Gew.-%, besonders bevorzugt über 0,025 Gew.-%, ganz besonders bevorzugt über 0,05 Gew.-%, Nachvernetzer eingesetzt, jeweils bezogen auf das Grundpolymer.

Schwach nachvernetzte wasserabsorbierende Polymere weisen typischerweise eine Absorption unter einem Druck von 2070 Pa (0,3 psi) von höchstens 25 g/g, vorzugsweise höchstens 23 g/g, besonders bevorzugt höchstens 21 g/g, bzw. eine Absorption unter einem Druck von 4830 Pa von höchstens 18 g/g, vorzugsweise höchstens 15 g/g, besonders bevorzugt höchstens 12 g/g, auf. Die Absorption unter Druck wird gemäß der von der EDANA (European Disposables and Nonwovens Association) empfohlenen Testmethode Nr. 442.2-02 "Absorption under pressure" bestimmt.

Über die Nachvernetzung wird die Klebrigkeit des wasserabsorbierenden Polymeren eingestellt. Bei zu geringer Nachvernetzung kleben die Partikel im gequollenen Zustand zu stark aneinander und neigen zur Verbackung. Bei zu starker Nachvernetzung verlieren die gequollenen Partikel ihre Klebrigkeit völlig. Für den Einsatz bei der Brandbekämpfung ist aber eine Optimierte Klebrigkeit vorteilhaft, da die Partikel ohne weitere Hilfsstoffe auf dem zu schützenden brennbaren Material haften können.

Die in den erfindungsgemäßen Zusammensetzungen einsetzbaren Alkalisalze nichtpolymerer gesättigter Carbonsäuren enthalten vorzugsweise Carboxylatgruppen, deren korrespondierende Carbonsäuren bei 23°C einen pKs-Wert von unter 7, besonders bevorzugt von unter 6, ganz besonder bevorzugt unter 5, aufweisen, wobei der pKs-Wert vorzugsweise über 2, besonders bevorzugt über 3, ganz besonders bevorzugt über 4, beträgt.

Unter Carbonsäuren sind Mono-, Di-, Tri-, Tetra-, Penta-, und Polycarbonsäuren zu verstehen, wobei der gemittelte pKs-Wert maßgebend ist.

Nichtpolymere Carbonsäuren sind Carbonsäuren mit einem Molekulargewicht von unter 2000 g/mol, vorzugsweise von unter 1000 g/mol, besonders bevorzugt von unter 500 g/mol.

Das atomare Verhältnis von Kohlenstoff zu Alkalimetall in dem verwendeten Alkalisalz einer nichtpolymeren Carbonsäure sollte unter 10:1, vorzugsweise unter 6:1, besonders bevorzugt unter 3:1, und vorzugsweise mindestens 1:1, besonders bevorzugt mindestens 1,5:1, ganz besonders bevorzugt mindestens 1,8:1, betragen.

Das atomare Verhältnis von Sauerstoff zu Kohlenstoff in dem verwendeten Alkalisalz einer nichtpolymeren Carbonsäure sollte mindestens 0,85:1, vorzugsweise mindestens 1:1, besonders bevorzugt mindestens 1,15:1, betragen.

Salze, die die obengenannten Bedingungen erfüllen, enthalten im Verhältnis zum Alkalimetall wenig Kohlenstoff und dieser Kohlenstoff weist eine hohe mittlere Oxidationstufe auf, d.h. die Salze selber liefern aufgrund ihrer Stöchiometrie bei der Verbrennung nur wenig Energie und erzeugen viel Kohlendioxid.

Salze gesättigter Carbonsäuren sind Carbonsäuren, die keine ethylenisch ungesättigten und damit radikalisch polymerisierbaren Gruppen aufweisen. Salze ungesättigter Carbonsäuren, d.h. ethylenisch ungesättigter Carbonsäuren, sind reaktionsfähig und können durch Folgereaktionen die Lagerstabilität der brandhemmenden Zusammensetzungen senken.

Bevorzugt sind Alkalisalze der Oxalsäure, der Glukonsäure, der Zitronensäure sowie der Weinsäure. Salze der Zitronensäure sind besonders bevorzugt.

Die Wirksamkeit der Alkalimetallsalze steigt in der Reihe Lithium, Natrium, Kalium, Cäsium und Rubidium. Aus Kostengründen sind Natrium- und Kaliumsalze bevorzugt. Ganz besonders bevorzugt sind Kaliumcarboxylate.

Bevorzugtes Alkalimetallsalz ist Trikaliumzitrat.

Die in den erfindungsgemäßen Zusammensetzungen einsetzbaren Alkalisalze nichtpolymerer Carbonsäuren haben überraschenderweise nur einen geringen Einfluss auf des Quellfähigkeit des mitverwendeten wasserabsorbierenden Polymers. Üblicherweise beträgt die Zentrifugenretentionskapazität des verwendeten wasserabsorbierenden Polymeren mindestens 5 g/g, vorzugsweise mindestens 10 g/g, besonders bevorzugt mindesten 15 g/g, wobei der Test analog zur von der EDANA (European Disposables and Nonwovens Association) empfohlenen Testmethode Nr. 441.2-02 "Centrifuge retention capacity" mit einer 10 gew.-%igen wässrigen Lösung des verwendeten Alkalimetallsalzes der nichtpolymeren Carbonsäure durchgeführt wird.

Die erfindungsgemäßen brandhemmenden Zusammensetzungen weisen eine gute Langzeitwirkung und im mit Wasser gequollenen Zustand eine gute Sorfortlöschwirkung auf. Die erfindungsgemäßen Zusammensetzungen werden zusammen mit Wasser eingesetzt. Dabei kann dieses Mischen vor ihrem Einsatz oder während ihres Einsatzes erfolgen.

Die erfindungsgemäßen Zusammensetzungen eignen sich als Löschmittel zur Feuerbekämpfung. Beispielsweise kann eine wässrige Zubereitung angesetzt und für eine Feuerlöscheinsatz bereitgehalten werden. Es ist aber auch möglich die wässrige Zubereitung erst während eines Feuerlöscheinsatzes durch Verdünnen mit Wasser herzustellen.

Die erfindungsgemäßen Zusammensetzungen eignen sich aber auch als brandhemmende Beschichtungen für Kleidungsstücke oder Gebäudeteile. In diesem Fall können die beschichteten Kleidungsstücke erst unmittelbar vor ihrem Einsatz befeuchtet werden. Die so behandelten Kleidungsstücke sind aufgrund der hohen Menge gebundenen Wassers nur schwer entflammbar. Beschichtete Gebäudeteile können auch erst während eines Löscheinsatzes mit Wasser benetzt werden. Dadurch wird bewirkt, dass das Löschwasser nicht fortläuft sondern an den gefährdeten Bereichen gebunden wird.

Das Verhältnis von wasserabsorbierendem Polymer zu Alkalimetallsalz einer nichtpolymeren Carbonsäure in der erfindungsgemäßen Zusammensetzung kann zwischen 100:1 bis 1:1000 liegen und beträgt üblicherweise 1:1 bis 1:100, vorzugsweise von 1:2 bis 1:50, besonders bevorzugt von 1:4 bis 1:25, ganz besonders bevorzugt von 1:8 bis 1:15.

Ein zu geringer Anteil an wasserabsorbierendem Polymer senkt die Sofortlöschwirkung der wässrigen Zubereitung, ein zu hoher Anteil erhöht die Viskosität zu stark. Bei der Verwendung der brandhemmenden Zusammensetzung zur Beschichtung von textilen Materialien, Baustoffen oder Bauteilen können daher auch höhere Anteile an wasserabsorbierendem Polymer vorteilhaft sein.

In einer bevorzugten Ausführungsform enthält die brandhemmende Zusammensetzung zusätzlich Wasser. Der Wassergehalt beträgt üblicherweise mindestens 55 Gew.-%, vorzugsweise mindestens 65 Gew.-%, besonders bevorzugt mindestens 75 Gew.-%, ganz besonders bevorzugt mindestens 85 Gew.-%, und vorzugsweise bis zu 95 Gew-%, besonders bevorzugt bis zu 90 Gew-%, jeweils bezogen auf die brandhemmende Zusammensetzung.

In einer vorteilhaften Ausführungsform enthält die brandhemmende Zusammensetzung zusätzlich einen Verdicker. Der Verdicker erhöht die Lagerstabilität der wässrigen Zubereitung und verhindert ein Sedimentieren des gequollenen wasserabsorbierenden Polymeren. Gleichzeitig sollte die wässrige Zubereitung noch pumpbar sein.

Geeignete Verdicker sind natürliche organische Verdicker, wie Agar-Agar, Carrageen, Tragant, Xanthan, Gummi arabicum, Alginate, Pektine, Polyosen, Guar-Mehl, Johannisbrotbaumkernmehl, Stärke, Dextrine, Gelatine oder Casein, abgewandelte organische Naturstoffe, wie Carboxymethylcellulose, vollsynthethische organische Verdicker, wie Polyacrylverbindungen, Polymethacrylverbindungen, Vinylpolymere, Polycarbonsäuren, Polyether, Polyimine oder Polyamide, sowie anorganische Verdicker, wie Polykieselsäuren oder Tonmineralien.

Die Konzentration des Verdickers in der wässrigen Zubereitung beträgt vorzugsweise bis zu 2 Gew.-%, besonders bevorzugt bis zu 1 Gew.-%, ganz besonders bevorzugt bis zu 0,5 Gw.-%, und vorzugsweise mindestens 0,01 Gew.-%, besonders bevorzugt mindestens 0,05 Gew.-%, ganz besonders bevorzugt mindestens 0,1 Gew.-%, jeweils bezogen auf die wässrigen Zubereitung.

Die Viskosität der wässrigen Zubereitung beträgt vorzugsweise mindestens 100 mPas, besonders bevorzugt mindestens 200 mPas, ganz besonders bevorzugt mindestens 500 mPas, und vorzugsweise bis zu 5000 mPas, besonders bevorzugt bis zu 2000 mPas, ganz besonders bevorzugt bis zu 1000 mPas.

Zusätzlich können die erfindungsgemäßen Zusammensetzungen noch Biozide und Lösungsvermittler enthalten.

Die Biozide erhöhen die Lagerstabilität, insbesondere der wässrigen Zubereitungen.

Weiterhin ist der Zusatz oberflächenvergrößernder Stoffe, wie Fasern oder pyrogene Kieselsäure, möglich.

Vorteilhaft ist auch der Zusatz von Farbmitteln und gegebenenfalls von Deckhilfsmitteln. Die Deckhilfsmittel trüben die brandhemmende Zusammensetzung und verhindern eine Wechselwirkung der Farbe des verwendeten zugesetzten Farbmittels mit der Untergrundfarbe. Dadurch ist es beispielsweise möglich bei der Bekämpfung von Waldbränden bereits mit Löschmittel belegte Gebiete leicht zu erkennen. Vorzugsweise enthalten die brandhemmenden Zusammensetzungen mindestens ein Farbmittel und mindestens ein Deckhilfsmittel.

Bevorzugtes Farbmittel ist Glimmer, insbesondere Naturglimmer. Glimmer wirkt gleichzeitig als Deckhilfsmittel, so dass auf einen Zusatz eines separaten Deckhilfsmittels verzichtet werden kann. Bereits behandelte Flächen sind leichter zu erkennen, beispielsweise aus der Luft. Zusätzlich kann Glimmer auch direkte Wärmestrahlung reflektieren.

Die Konzentration des Farbstoffs in der brandhemmenden Zusammensetzung beträgt vorzugsweise 0,005 bis 10 Gew.%, besonders bevorzugt 0,01 bis 5 Gew.-%, ganz besonders bevorzugt 0,015 bis 2 Gew.-%.

Besonders vorteilhaft sind Farbstoffe, beispielsweise Lebensmittelfarbstoffe, die beim Trocknen der brandhemmenden Zusammensetzung verblassen und sich mit der Zeit zersetzen oder sich anderweitig leicht entfernen lassen, beispielsweise durch Spülen mit Wasser.

Geeignete Deckhilfsmittel sind anorganische Verbindungen mit einer Wasserlöslichkeit von bis zu 0,005 g/ 100ml Wasser bei 25°C, wie Kreide, Kalziumkarbonat, Titandioxid.

Geeignete Deckhilfsmittel sind aber auch in der brandhemmenden Zusammensetzung dispergierbare Polymere oder Copolymere, beispielsweise Styrol/Butadien-Copolymere, Styrol/Vinylpyrolidon-Copolymere, Styrol/Butadien/ Acrylnitril-Copolymere, Polyacrylsäure, Polyvinylacetat, Polyvinylacrylat, Stärke, Polystyrol, Polyethylenimin, Polyethylen oder Polyvinylalkohol.

Selbstverständlich können auch Gemische verschiedener Deckhilfsmittel eingesetzt werden.

Die Konzentration des Deckhilfsmittels in der brandhemmenden Zusammensetzung beträgt vorzugsweise 0,005 bis 10 Gew.%, besonders bevorzugt 0,01 bis 5 Gew.-%, ganz besonders bevorzugt 0,015 bis 2 Gew.-%.

Geeignete Schaummittel sind Mehrbereichsschaummittel, Proteinschaummittel und Fluortensidschaummittel, insbesondere Mehrbereichsschaummittel und Fluortensidschaummittel. Diese Schaummittel sind dem Fachmann bekannt, beispielsweise aus der EN 3. Bei der Anwendung der erfindungsgemäßen Zusammensetzung wird der Schaum in üblicher Weise durch Einmischen von Luft erzeugt.

Die Kombination eines gequollenen Hydrogels mit einem Schaum ist besonders vorteilhaft beim Löschen brennbarer Flüssigkeiten, insbesondere brennbarer hochviskoser Flüssigkeiten, wie Öle, Parafine, Bitumen, Kunststoffschmelzen und Fette.

Beim Löschen brennbarer Flüssigkeiten mit Löschschaum wird die Sauerstoffzufuhr durch den Schaum unterbrochen. Allerdings kann ein Teil der brennbaren Flüssigkeit verdampfen und sich an heißen Flächen oberhalb der Schaumschicht erneut entzünden. Durch das gequollene Hydrogel können diese Flächen soweit abgekühlt werden, dass eine Zündung nicht mehr möglich ist.

Beim Löschen brennbarer hochviskoser Öle, wie Thermoöle oder Fette, mit Löschschaum wird ebenfalls die Sauerstoffzufuhr durch den Schaum unterbrochen, wobei aber der Schaum durch die hohe Temperatur des Öles zerstört wird. Wird gleichzeitig ein gequollenes Hydrogel als Löschmittel eingesetzt, so sinkt das Hydrogel durch die Schaumschicht und kühlt das Öl, beispielsweise durch verzögerte Wasserverdampfung unter der Flammpunkt ab. Ein vorhandenes Alkalimetallsalz unterstützt die Löschwirkung bei Fettbränden. Durch Fettverseifung werden Seifen gebildet, die das Fett schwer entflammbar machen. Zusätzlich schäumen die entstandenen Seifen auf und unterbrechen so die Sauerstoffzufuhr.

Eine bevorzugte erfindungsgemäße Zusammensetzung enthält

a) 0,1 bis 5 Gew.-%, vorzugsweise 0,5 bis 2 Gew.-%, besonders bevorzugt 0,8 bis 1,2 Gew.-%, mindestens ein wasserabsorbierendes Polymer,

b) 1 bis 65 Gew.-%, vorzugsweise 5 bis 40 Gew.-%, besonders bevorzugt 8 bis 12 Gew.-%, mindestens Alkalimetallsalz einer nichtpolymeren gesättigten Carbonsäure,

c) gegebenenalls 0,01 bis 2 Gew.-%, vorzugsweise 0,05 bis 1 Gew.-%, besonders bevorzugt 0,1 bis 0,5 Gew.-%, mindestens ein Verdickungsmittel,

d) 30 bis 95 Gew.-%, vorzugsweise 55 bis 92 Gew.-%, besonders bevorzugt 85 bis 90 Gew.%, Wasser,

e) gegebenenfalls mindestens ein Biozid,

f) gegebenenfalls mindestens einen Lösungsvermittler,

g) gegebenenfalls mindestens ein Farbmittel,

h) gegebenenfalls mindestens ein Deckhilfsmittel und

i) gegebenenfalls ein Schaummittel.

Die Summe der Komponenten a) bis i) beträgt dabei maximal 100 Gew.-%.

Die erfindungsgemäßen Zusammensetzungen ergeben im Brandschachttest gemäß DIN 4102 mit Weichholzspänen (1,5 bis 5 mm) üblicherweise eine Lichtabsorption von unter 50 %xmin, vorzugsweise von unter 25 %xmin, besonders bevorzugt von unter 10 %xmin, und eine Zündung der Oberfläche nach mindestens 10 s, vorzugsweise nach mindestens 20 s, besonders bevorzugt nach mindestens 30 s, wobei die Weichholzspäne mit der gleichen Gewichtsmenge der erfindungsgemäßen Zusammensetzung vermischt und bei 80°C getrocknet werden. Die Lichtabsorption ist ein Maß für die Rauchentwicklung und der Zündzeitpunkt ein Maß für die brandhemmende Wirkung (Langzeitwirkung). Weichhölzer sind Hölzer schnellwachsender Bäume, insbesondere Nadelbäume, wie Kiefer oder Fichte.

Die Zusammensetzungen lassen sich durch Mischen der Komponenten a) und b) sowie gegebenenfalls der weiteren Komponenten c) bis i) herstellen. Die Reihenfolge es Mischens ist beliebig. Vorteilhaft werden wässrige Zubereitungen hergestellt, indem Wasser vorgelegt und die übrigen Komponenten eingemischt werden. Besonders bevorzugt werden die Komponenten a) und c) zuletzt zugesetzt.

Es ist aber auch möglich die Komponente i) zuletzt zuzumischen, beispielsweise während eines Löscheinsatzes durch eine geeignete Venturidüse.

Zusätzlich können die erfindungsgemäßen Zusammensetzungen noch Bindemittel bzw. Entstaubungsmittel enthalten. Besonders geeignete Bindemittel bzw. Entstaubungsmittel sind Polyethylenglykole mit einem Molekulargewicht von 100 bis 20000 g/mol, Polyglyzerin, 3- bis 100-fach ethoxylierte Polyole, wie Trimethylolpropan, Glyzerin, Sorbitol und Neopentylglykol, wobei Polyethylenglykole mit einem Molekulargewicht von 200 bis 300 g/mol bevorzugt sind.

Ein Schaummittel kann als Entstaubungs- und/oder Klebemittel benutzt werden.

Die erfindungsgemäßen Zusammensetzungen eignen sich hervorragendend zur Brandbekämpfung und zur Herstellung brandhemmender Beschichtungen.

Die erfindungsgemäßen Zusammensetzungen können beispielsweise zur Brandbekämpfung in Wäldern, Reifenlagern, Mülldeponien, Kohlehalden, Holzlagern und Bergwerken eingesetzt werden, vorzugsweise zur Brandbekämpfung von Waldbränden aus der Luft, beispielsweise mittels Flugzeugen und Hubschraubern. Aber auch andere Löschgeräte wie Hand- oder Motorspritzen.

Herkömmliche bei der Bekämpfung von Waldbrände aus der Luft verwendete Zusammensetzungen zerstäuben und vernebeln beim Abwurf aus der Luft. Die dabei entstehenden feinen Tropfen sinken nur noch sehr langsam oder auch gar nicht mehr zu Boden. Bei hohen Temperaturen und geringer Luftfeuchtigkeit tritt zusätzlich eine spürbare Verdampfung auf. Dadurch ist nur noch ein geringer Teil der Zusammensetzung am Boden wirksam. Die erfindungsgemäßen wässrigen Zusammensetzungen weisen diesen Nachteil nicht mehr auf. Da die erfindungsgemäßen wässrigen Zusammensetzungen sich deutlich schwerer vernebeln lassen, werden auch am Boden beim Versprühen der erfindungsgemäßen wässrigen Zusammensetzungen, beispielsweise mit einem C-Rohr, deutlich größere Sprühweiten erzielt.

Vorzugsweise werden textile Materialien, wie Bekleidungsgegenstände oder Bühnendekorationen, mit den erfindungsgemäßen Zusammensetzungen beschichtet.

Vorzugsweise werden Baustoffe und/oder Bauteile, wie Holzpaneele, mit den erfindungsgemäßen Zusammensetzungen beschichtet. Die mit den erfindungsgemäßen Zusammensetzung beschichteten Baustoffe und/oder Bauteile sind gegenüber unbeschichteten Baustoffen und/oder Bauteilen deutlich schwerer entflammbar. Beispielsweise ist es möglich, dass als "leicht brennbar" gemäß DIN 4102 eingestufte Baustoffe und/oder Bauteile nach erfindungsgemäßer Beschichtung nur noch als "schwer entflammbar" oder "nicht entflammbar" eingestuft werden.

Die Zusammensetzungen eignen sich als Löschmittel zur Feuerbekämpfung, vorzugsweise für Brände der Brandklassen A, B, C und D, besonders bevorzugt für Brände der Brandklassen A, B und C, ganz besonders bevorzugt für Brände der Brandklassen A und B. Beispielsweise kann eine wässrige Zubereitung angesetzt und für eine Feuerlöscheinsatz bereitgehalten werden. Es ist aber auch möglich die wässrige Zubereitung erst während eines Feuerlöscheinsatzes durch Verdünnen mit Wasser herzustellen.

Weiterhin eignet sich die erfindungsgemäßen brandlöschenden und/oder brandhemmenden Zusammensetzung zur Verwendung als Löschmittel in Löschgeräten und/oder Löschanlagen sowie über vorhandene Feuerlöschpumpen und Armaturen. Löschgeräte sind beispielsweise tragbare und/oder fahrbare Feuerlöscher. Löschanlagen sind fest installierte Anlagen, wie Sprinkleranlagen.

Die erfindungsgemäßen Zusammensetzungen bewirken selbst im trockenen Zustand (Langzeitwirkung) eine deutlich verzögerte Zündung auf der Oberfläche eines entflammbaren Materials (Zündzeitpunkt), eine erheblich reduzierte Rauchentwicklung (Lichtabsorption) sowie nahezu kein Nachglimmen (Antischwelwirkung).

Die erfindungsgemäßen Zusammensetzungen lassen sich auch nach Gebrauch durch einfaches Spülen mit Wasser leicht entfernen.

Die in den erfindungsgemäßen Zusammensetzungen vorzugsweise verwendeten Zitrate sind sehr gut biologisch abbaubar. Dies ist insbesondere bei der Bekämpfung von Waldbränden, wobei die brandlöschende und/oder brandhemmende Zusammensetzung auf große Flächen aufgebracht wird, vorteilhaft. Die erfindungsgemäßen Zusammensetzungen weisen auch nicht die Nachteile der bislang in der Bekämpfung von Waldbränden verwendeten Ammoniumverbindungen auf, die gleichzeitig als Dünger in Gewässer negativ wirken können.

Weiterhin sind die erfindungsgemäßen Zusammensetzungen sehr frostbeständig. So ist es beispielsweise möglich eine erfindungsgemäße wässrige Zusammensetzung zu erhalten, die noch bei -30°C versprüht werden kann und bei -60°C eine hochviskose aber noch plastische Masse ist. Dadurch wird auch bei sehr tiefen Temperaturen ein Bersten der Behälter vermieden.

Weiterhin sind die erfindungsgemäßen Zusammensetzungen nicht korrosiv, insbesondere gegen Aluminium. Da Flugzeuge vorwiegend aus Aluminium bestehen, ist dies bei der Bekämpfung von Waldbränden aus der Luft von besonderer Bedeutung.

Testmethoden

Zentrifugenretentionskapazität (Centrifuge retention capacity, CRC)

Die Bestimmung der Zentrifugenretentionskapazität wurde analog zur von der EDANA (European Disposables and Nonwovens Association) empfohlenen Testmethode Nr. 441.2-02 "Centrifuge retention capacity" durchgeführt.

Zur Bestimmung der Zentrifugenretentionskapazität wurden 0,2000 ± 0,0050 g getrocknetes wasserabsorbierendes Polymer (Kornfraktion 106 bis 850 $\mu$m) in einem 60 x 85 mm großen Teebeutel eingewogen, der anschließend verschweißt wurde. Der Teebeutel wurde für 30 Minuten in einen Überschuss einer 0,9 gew.-%igen Kochsalzlösung bzw. einer 10 gew.-%igen wässrigen Lösung eines Alkalisalzes einer nichtpolymeren Carbonsäure gegeben (mindestens 0,83 l Lösung/1 g Polymerpulver). Anschließend wurde der Teebeutel 3 Minuten lang bei 250 G zentrifugiert. Die Bestimmung der vom wasserabsorbierenden Polymer festgehaltenen Flüssigkeitsmenge geschieht durch Auswägen des zentrifugierten Teebeutels.

Absorption unter Druck (AUL Absorbency Under Load) 0,7 psi (4830 Pa)

Die Bestimmung der Absorption unter Druck wurde analog zur von der EDANA (European Disposables and Nonwovens Association) empfohlenen Testmethode Nr. 442.2-02 " Absorption under pressure" durchgeführt.

Die Messzelle zur Bestimmung der AUL 0,7 psi ist ein Plexiglas-Zylinder mit einem Innendurchmesser von 60 mm und einer Höhe von 50 mm, der an der Unterseite einen angeklebten Edelstahl-Siebboden mit einer Maschenweite von 36 $\mu$m besitzt. Zu der Messzelle gehört weiterhin eine Plastikplatte mit einem Durchmesser von 59 mm und ein Gewicht, welches zusammen mit der Plastikplatte in die Messzelle hineingestellt werden kann. Das Gewicht der Plastikplatte und das Gewicht betragen zusammen 1344 g. Zur Durchführung der Bestimmung der AUL 0,7 psi wird das Gewicht des leeren Plexiglas-Zylinders und der Plastikplatte ermittelt und als W0 notiert. Dann werden 0,900 ± 0,005 g quellbares hydrogelbildendes Polymer (Korngrößenverteilung 150 - 850 $\mu$m) in den Plexiglas-Zylinder eingewogen und möglichst gleichmäßig auf dem Edelstahl-Siebboden verteilt. Anschließend wird die Plastikplatte vorsichtig in den Plexiglas-Zylinder hineingelegt und die gesamte Einheit gewogen; das Gewicht wird als Wa notiert. Nun wird das Gewicht auf die Plastikplatte in dem Plexiglas-Zylinder gestellt. In die Mitte der Petrischale mit einem Durchmesser von 200 mm und einer Höhe von 30 mm wird eine keramische Filterplatte mit einem Durchmesser von 120 mm, einer Höhe von 10 mm und einer Porosität 0 gelegt und soviel 0,9 gew.-%ige Natriumchloridlösung eingefüllt, dass die Flüssigkeitsoberfläche mit der Filterplattenoberfläche abschließt, ohne dass die Oberfläche der Filterplatte benetzt wird. Anschließend wird ein rundes Filterpapier mit einem Durchmesser von 90 mm und einer Porengröße < 20 $\mu$m (S&S 589 Schwarzband von Schleicher & Schüll) auf die keramische Platte gelegt. Der quellbares hydrogelbildendes Polymer enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Hydrogel enthaltende Plexiglas-Zylinder wird zusammen mit der Plastikplatte ausgewogen und das Gewicht als Wb notiert.

Die Absorption unter Druck (AUL) wird wie folgt berechnet:

$$\text{AUL 0,7 psi [g/g]} = [Wb\text{-}Wa]/[Wa\text{-}W0]$$

Absorption unter Druck (AUL Absorbency Under Load) 0,3 psi (2070 Pa)

Die Messung wird analog der AUL 0.3 psi durchgeführt. Das Gewicht der Plastikplatte und das Gewicht betragen zusammen 576 g.

Brandschachttest

2,4 kg Weichholzspäne (1,5 bis 5 mm) werden mit 2,4 kg der Zusammensetzung vermischt und 16 Stunden im Umlufttrockenschrank getrocknet. Die getrocknete Mischung wird gleichmäßig in vier rechteckige, flache Wannen (190 mm x 1000 mm) mit abnehmbarer Bodenplatte verteilt. Die Füllhöhe beträgt ca. 50 mm. Die Holzspäne werden mit einen Drahtnetz (Maschenweite 2 bis 4 mm) fixiert.

Der Brandschachttest wurde gemäß DIN 4102 durchgeführt.

Beispiele

Beispiel 1

In einen Lödige-Pflugscharkneter Typ VT 5R-MK (5 l Volumen) wurden 1000 g entionisiertes Wasser und 810 g Acrylsäure vorgelegt und unter Durchperlen von Stickstoff 20 Minuten inertisiert. Anschließend wurde mit 263 g einer 48 gew.-%igen, ebenfalls inertisierten, Kaliumhydroxidlösung neutralisiert. Anschließend wurden 0,65 g Pentaerithrittriallylether und 10 g Sorbitanmonolaurat zugesetzt. Dann wurde durch Zusatz (verdünnte wässrige Lösungen) von 2,7 g Natriumpersulfat gelöst in 15,3 g Wasser und 0,024 g Ascorbinsäure gelöst in 4,8 g Wasser bei ca. 23 °C die Polymerisation gestartet. Nach dem Erreichen der Maximaltemperatur wurde noch 15 Minuten nachgerührt. Anschließend wurde das erhaltene Hydrogel mit 527 g einer 48 gew.-%igen Kaliumhydroxidlösung nachneutralisiert. Das letztlich erhaltene krümelige Gel wurde dann bei 160°C ca. 3 Stunden im Umlufttrockenschrank getrocknet.

Das getrocknete Grundpolymer wurde gemahlen und auf 106 bis 850 $\mu$m abgesiebt.

100 g des getrockneten Grundpolymers wurden in einem Waring-Labormischer vorgelegt, der mit einem Aufsatz mit stumpfen Mischklingen ausgerüstet war. Bei mittlerer Drehzahl wurden dann mittels einer Injektionsspritze langsam durch ein Loch im Deckel des Mischaufsatzes langsam 0,07 g Ethylenglykoldiglycidylether gelöst in 2 g 1,2-Propandiol und 1 g Wasser unter Rühren zugefügt, um das Grundpolymer möglichst gleichmäßig zu benetzen.

Das befeuchtete Polymer wurde durch Rühren homogenisiert und dann auf einem Uhrglas im Umlufttrockenschrank für 60 Minuten bei 150°C getempert. Schließlich wurde durch ein 850 $\mu$m Sieb gesiebt, um Klumpen zu entfernen.

Die Zentrifugenretentionskapazität des nachvernetzten Polymers wurde in unterschiedlichen Lösungen bestimmt.

Tabelle 1: Zentrifugenretentionskapazität in unterschiedlichen Lösungen

| Wässrige Testlösung | Zentrifugenretentionskapazität [g/g] |
|---|---|
| 0,9 Gew.-% NaCl | 25 |
| 10 Gew.-% Trikaliumzitrat | 16,8 |

Beispiel 2

Es wurde eine brandlöschende und/oder brandhemmenden Zusammensetzung durch Einrühren der Komponenten in Wasser hergestellt. Die Zusammensetzung enhielt 1 Gew.-% wasserabsorbierendes Polymer gemäß Beispiel 1, 10 Gew.-% Trikaliumzitrat, 0,2 Gew.-% Xanthan (Verdickungsmittel), 0,12 Gew.-% Polyethylenglykol (Lösungsvermittler), 0,2 Gew.-% Acticide® MBS (Biozid) und Wasser.

Mit der brandlöschenden und/oder brandhemmenden Zusammensetzung wurde ein Brandschachttest durchgeführt.

Nach dem Brandschachttest war die Unterseite der Proben weitgehend unverändert (nur geringe Verkohlungsspuren). Es wurde kein Nachglimmen beobachtet. Die Rauchdichte während des Versuchs war gering (Lichtabsorption). Die Ergebnisse sind in Tabelle 2 zusammengefasst.

Beispiel 3 (Vergleichsbeispiel)

Beispiel 2 wurde mit einer brandlöschenden und/oder brandhemmenden Zusammensetzung auf Basis einer 20 gew.-%igen Ammoniumpyrophosphatlösung wiederholt.

Nach dem Brandschachttest war die Unterseite der Proben nahezu vollständig verkohlt. Nach dem Versuch glomm die Probe noch 5 Stunden nach und wurde dabei vollständig aufgezehrt. Die Rauchdichte während des Versuchs war mäßig (Lichtabsorption). Die Ergebnisse sind in Tabelle 2 zusammengefasst.

Tabelle 2: Ergebnisse des Brandschachttests gemäß DIN 4102

| | Beispiel 2 | Beispiel 3 (Vergleichsbeispiel) |
|---|---|---|
| max. Flammenhöhe [cm] | 60 | 120 |
| Lichtabsorption [%xmin] | 1 | 115 |
| mittlere Restlänge [cm] | 22 | 0 |
| Zündung der Oberfläche [s] | 40 | 1 |

**EP 1 817 086 B1**

**Patentansprüche**

1. Brandlöschende und/oder brandhemmende Zusammensetzungen, enthaltend mindestens ein wasserabsorbierendes Polymer mit einer Zentrifugenretentionskapazität von mindestens 15 g/g und mindestens ein Alkalisalz einer nichtpolymeren gesättigten Carbonsäure.

2. Zusammensetzung gemäß Anspruch 1, enthaltend Wasser.

3. Zusammensetzung gemäß Anspruch 1 oder 2, enthaltend ein Verdickungsmittel.

4. Zusammensetzung gemäß einem der Ansprüche 1 bis 3, wobei das wasserabsorbierende Polymer eine teilneutralisierte vernetzte Polyacrylsäure ist.

5. Zusammensetzung gemäß einem der Ansprüche 1 bis 4, wobei das Alkalisalz ein Natrium oder Kaliumsalz ist.

6. Zusammensetzung gemäß einem der Ansprüche 1 bis 5, wobei das Alkalisalz Trikaliumzitrat ist.

7. Zusammensetzung gemäß einem der Ansprüche 1 bis 6, enthaltend ein Schaummittel.

8. Verfahren zur Herstellung einer brandlöschenden und/oder brandhemmenden Zusammensetzung gemäß einem der Ansprüche 1 bis 7, **dadurch gekennzeichnet, dass** man mindestens ein wasserabsorbierendes Polymer und mindestens ein Alkalisalz einer nichtpolymeren Carbonsäure mischt.

9. Verwendung einer brandlöschenden und/oder brandhemmenden Zusammensetzung gemäß einem der Ansprüche 1 bis 7, zur Brandbekämpfung oder zur Herstellung brandhemmender Beschichtungen.

10. Verwendung gemäß Anspruch 9 zur Brandbekämpfung in Wäldern, Reifenlagern, Mülldeponien, Kohlehalden, Holzlagern und Bergwerken.

11. Verwendung gemäß Anspruch 9 oder 10 zur Brandbekämpfung aus der Luft.

12. Verwendung einer brandlöschenden und/oder brandhemmenden Zusammensetzung gemäß einem der Ansprüche 1 bis 7, in Löschgeräten, Löscharmaturen und/oder Löschanlagen.

13. Textile Materialien, beschichtet mit einer brandhemmenden Zusammensetzung gemäß einem der Ansprüche 1 bis 7.

14. Baustoffe und/oder Bauteile, beschichtet mit einer brandhemmenden Zusammensetzung gemäß einem der Ansprüche 1 bis 7.

15. Löschgeräte, Löscharmaturen und/oder Löschanlagen, enthaltend eine brandlöschende und/oder brandhemmende Zusammensetzung gemäß einem der Ansprüche 1 bis 7.

**Claims**

1. A fire-extinguishing and/or fire-retarding composition comprising at least one water-absorbing polymer having a centrifuge retention capacity of not less than 15 g/g and at least one alkali metal salt of a nonpolymeric saturated carboxylic acid.

2. The composition according to claim 1 that comprises water.

3. The composition according to claim 1 or 2 that comprises a thickener.

4. The composition according to any one of claims 1 to 3 wherein the water-absorbing polymer is a partially neutralized crosslinked polyacrylic acid.

5. The composition according to any one of claims 1 to 4 wherein the alkali metal salt is a sodium or potassium salt.

**6.** The composition according to any one of claims 1 to 5 wherein the alkali metal salt is tripotassium citrate.

**7.** The composition according to any one of claims 1 to 6 which comprises a foaling agent.

**8.** A process for producing a fire-extinguishing and/or fire-retarding composition according to any one of claims 1 to 7, which comprises mixing at least one water-absorbing polymer and at least one alkali metal salt of a nonpolymeric carboxylic acid.

**9.** The use of a fire-extinguishing and/or fire-retarding composition according to any one of claims 1 to 7 for firefighting or for producing fire-retarding compositions.

**10.** The use according to claim 9 for firefighting in forests, tire warehouses, landfill sites, coal stocks, timberyards and mines.

**11.** The use according to claim 9 or 10 for firefighting from the air.

**12.** The use of a fire-extinguishing and/or fire-retarding composition according to any one of claims 1 to 7 in extinguishers, extinguishing fittings and/or extinguishing systems.

**13.** A textile material coated with a fire-retarding composition according to any one of claims 1 to 7.

**14.** Building materials and/or structural components coated with a fire-retarding composition according to any one of claims 1 to 7.

**15.** Extinguishers, extinguishing fittings and/or extinguishing systems comprising a fire-extinguishing and/or fire-retarding composition according to any one of claims 1 to 7.

**Revendications**

**1.** Compositions éteignant les flammes et/ou inhibant les flammes, qui contiennent au moins un polymère absorbant l'eau qui a une capacité de rétention sous une force centrifuge supérieure ou égale à 15 g/g et au moins un sel alcalin d'un acide carboxylique saturé non polymère.

**2.** Composition selon la revendication 1, contenant de l'eau.

**3.** Composition selon la revendication 1 ou 2, contenant un agent épaississant.

**4.** Composition selon l'une quelconque des revendications 1 à 3, dans laquelle le polymère absorbant l'eau est un acide polyacrylique réticulé partiellement neutralisé.

**5.** Composition selon l'une quelconque des revendications 1 à 4, dans laquelle le sel alcalin est un sel de sodium ou de potassium.

**6.** Composition selon l'une quelconque des revendications 1 à 5, dans laquelle le sel alcalin est le citrate de tripotassium.

**7.** Composition selon l'une quelconque des revendications 1 à 6, contenant un agent moussant.

**8.** Procédé de fabrication d'une composition éteignant les flammes et/ou inhibant les flammes selon l'lune quelconque des revendications 1 à 7, **caractérisé en ce qu'**au moins un polymère absorbant l'eau et au moins un sel alcalin d'un acide carboxylique non polymère sont mélangés.

**9.** Utilisation d'une composition éteignant les flammes et/ou inhibant les flammes selon l'une quelconque des revendications 1 à 7 pour lutter contre les flammes ou pour fabriquer des revêtements inhibant les flammes.

**10.** Utilisation selon la revendication 9 pour lutter contre les flammes dans les forêts, les entrepôts de pneus, les décharges d'ordures, les zones de stockage de charbon, les entrepôts de bois et les mines.

**11.** Utilisation selon la revendication 9 ou 10 pour lutter contre les flammes à partir de l'air.

**12.** Utilisation d'une composition éteignant les flammes et/ou inhibant les flammes selon l'une quelconque des revendications 1 à 7 dans des équipements d'extinction des incendies, des robinetteries d'extinction des incendies et/ou des installations d'extinction des incendies.

**13.** Matériaux textiles enduits d'une composition inhibant les flammes selon l'une quelconque des revendications 1 à 7.

**14.** Matériaux de construction et/ou éléments de construction enduits d'une composition inhibant les flammes selon l'une quelconque des revendications 1 à 7.

**15.** Équipements d'extinction des incendies, robinetteries d'extinction des incendies et/ou installations d'extinction des incendies contenant une composition éteignant les flammes et/ou inhibant les flammes selon l'une quelconque des revendications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2003018695 A
- JP 1166777 A
- DE 1302520 C
- DE 3525684 A
- EP 059178 A
- EP 426178 A
- US 1278718 A
- US 4888136 A
- US 5945025 A
- US 20030212177 A
- WO 8800482 A
- US 3229769 A
- US 5849210 A
- US 5041496 A
- EP 530438 A
- EP 547847 A
- EP 559476 A
- EP 632068 A
- WO 9321237 A
- WO 03104299 A
- WO 03104300 A
- WO 03104301 A
- DE 10331450
- DE 10331456
- DE 10355401
- DE 19543368 A
- DE 19646484 A
- WO 9015830 A
- WO 0232962 A
- DE 19941423 A
- EP 686650 A
- WO 0145758 A
- WO 0138402 A
- EP 955086 A
- EP 083022 A
- EP 543303 A
- EP 937736 A
- DE 3314019 C
- DE 3523617 C
- EP 450922 A
- DE 10204938 A
- US 6239230 B
- DE 4020780 A
- DE 19807502 A
- DE 19807992 A
- DE 198545732 A
- DE 10204937 A
- DE 10334584
- EP 1199327 A
- WO 03031482 A

**In der Beschreibung aufgeführte Nicht-Patentliteratur**

- Ullmann's Encyclopedia of Industrial Chemistry. vol. 35, 81, 82
- **F.L. BUCHHOLZ ; A.T. GRAHAM.** Modern Superabsorbent Polymer Technology. Wiley-VCH, 1998
- UII-mann's Encyclopedia of Industrial Chemistry. vol. 35, 73-103